## Europäisches Patentamt

## European Patent Office

## Office européen des brevets

(11) Publication number: **0 159 380**
**B1**

(12) **EUROPEAN PATENT SPECIFICATION**

(45) Date of publication of patent specification: **08.11.89**

(51) Int. Cl.⁴: **G 01 S 13/70**

(21) Application number: **84104638.6**

(22) Date of filing: **25.04.84**

(54) Radar distance measuring apparatus.

(43) Date of publication of application:
**30.10.85 Bulletin 85/44**

(45) Publication of the grant of the patent:
**08.11.89 Bulletin 89/45**

(84) Designated Contracting States:
**DE GB IT**

(56) References cited:
**FR-A-2 106 966**
**FR-A-2 106 967**
**US-A-3 868 686**

(73) Proprietor: **HONEYWELL INC.**
**Honeywell Plaza**
**Minneapolis Minnesota 55408 (US)**

(72) Inventor: **Bjorke, Merlin D.**
**3626 Coolidge Street N.E.**
**Minneapolis, MN 55418 (US)**
Inventor: **Thue, Baard H.**
**8441 4th Avenue N.**
**Lino Lakes, MN 55014 (US)**

(74) Representative: **Herzbach, Dieter et al**
**Honeywell Europe S.A. Holding KG Patent- und**
**Lizenzabteilung Kaiserleistrasse 55 Postfach 184**
**D-6050 Offenbach am Main (DE)**

Courier Press, Leamington Spa, England.

## Description

The present invention relates to a radar distance measuring apparatus according to the preamble of claim 1 and particularly to pulse position coded, non-coherent radar altimeters.

Such a radar distance measuring apparatus is e.g. known from FR-A2 106 967. The known apparatus uses two separate pseudo-random code generators on the transmitting and on the receiving side with one code being delayed and correlated to the received code within a first correlator. A second correlator uses as a signal to be correlated with the received signal a modified pseudo-random code in order to generate a tracking signal corresponding to a radial velocity of the measured target.

Generally such pulse radar systems are operated with a relatively low transmitter duty cycle determined by the maximum range to the target. As a result the peak power required for the transmitter in order to obtain sufficient signal-to-noise ratio is high.

It is therefore the object of the present invention to improve the known radar distance measuring apparatus with respect to ambiguity signal degradation without increasing the power demand. This object is achieved according to the characterizing features of claim 1. Further advantageous embodiments of the present invention may be taken from the dependent claims.

The present invention eliminates noise from the received code signal normally including noise components. This increases sensitivity of the measurement and results in suppression of range correlation side lobes.

In the drawing in which like reference numerals identify similar elements throughout the several views, Figure 1 is a block diagram of a pulsed radar altimeter according to the invention, Figure 2 shows schematically certain relations between returned video pulses and local gating pulses in predetermined conditions, and Figure 3 shows schematically certain relations between individual video and gating pulses.

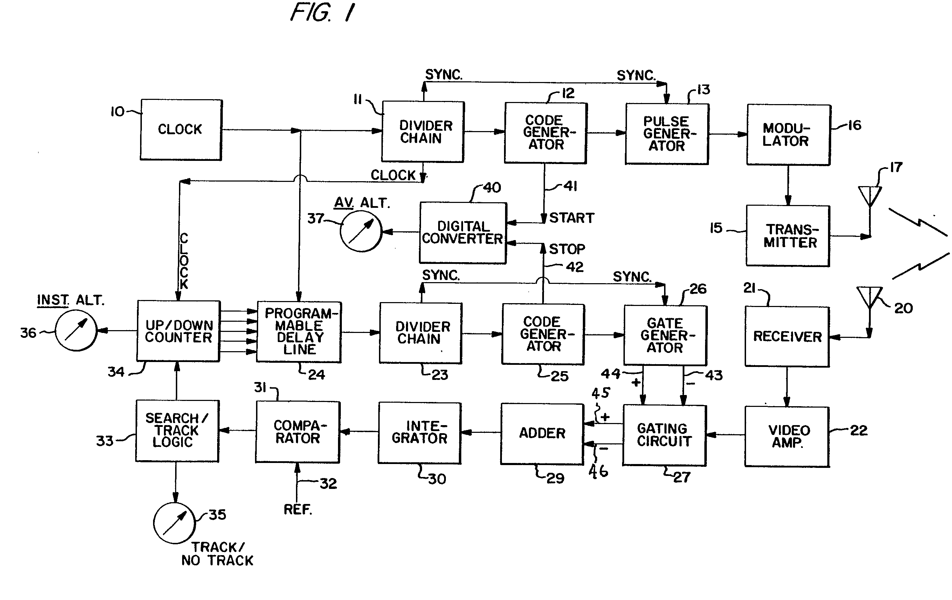

In the block diagram of Figure 1, a clock 10 supplies a continuous train of equally spaced pulses at a fixed pulse repetition frequency through a divider chain 11 to a "pseudorandom noise" (PRN) code generator 12 to provide a repeating pulse code which triggers a pulse generator 13 synchronized with the divider chain. A modulator 16 energizes a transmitter 15 as controlled by generator 13 so that the transmitter is fully on or fully off per pulse: there is not necessarily any controlled phase relation in the radio frequency from pulse to pulse. The repeating pulse words are radiated from a transmitting antenna 17 and reflected from the ground, or other target, to a receiving antenna 20 and a receiver 21 which energizes a video amplifier 22 to give a train of reflected pulse words delayed from the output of generator 13 by an interval which is a measure of the distance to the reflecting target. Antennas 17 and 20 may, if advantageous, be a duplexer antenna assembly.

Clock 10 also supplies a second divider chain 23, through a programmable delay line 24, to energize a second PRN code generator 25 identical to generator 12. Generator 25 actuates a gate generator 26 synchronized from chain 23. Generator 26 energizes a gating circuit 27 to control the supply of video signals from amplifier 22 through an adder 29, an integrator 30, and a comparator 31 having a reference input 32 to a search-and-track logic 33. This in turn actuates an up/down counter 34 to program the delay line 24. A track/non-track indicator 35 may be actuated from logic 33, an instantaneous altitude indicator 36 may be be energized from counter 34, and an average altitude indicator 37 may be actuated by a digital converter 40 having a START input 41 from generator 12 and an STOP input 42 from generator 25.

If the delay between generators 12, and 25, is exactly the same as the time required for each successive pulse to reach and be reflected from the ground, so that the first return or video pulse of each word is synchronized with a first gating pulse, then every video pulse in the word is synchronized with a gating pulse, and a maximum signal is supplied to the integrator. If the delay is such that the first video pulse is synchronized with some gating pulse other than the first one, some of the other video pulses are not synchronized with any gating pulses, and the integrator receives a smaller signal.

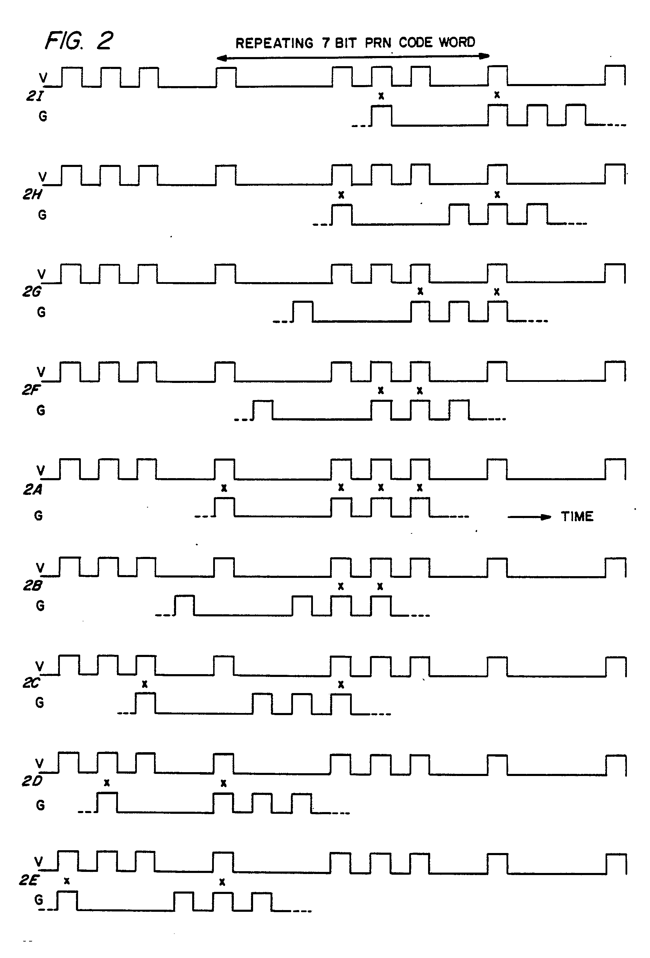

FIGURES 2A-2I illustrate this for the simple case of a "7-bit" word, one with 7 pulse positions. FIGURE 2A shows the gating word pulses "G" properly synchronized with the return video pulses, "V" FIGURES 2B, 2C, 2D, and 2E show the gating word successively 1, 2, 3, and 4 pulse positions too early, and FIGURES 2F, 2G, 2H, and 2I show the gating word successively 1, 2, 3, and 4 pulse positions too late. Note that in FIGURE 2A four pulses per video word, those marked with x, coincide with gating pulses, while in each of FIGURES 2-B to 2-I only two pulses per video word coincide with gating pulses. Thus, for even this short word, an integrator output corresponding to three or fewer coincident pulses is indicative that synchronization is not properly complete. For words with a greater number of bits, the output difference between correctly and incorrectly synchronized signals is even greater.

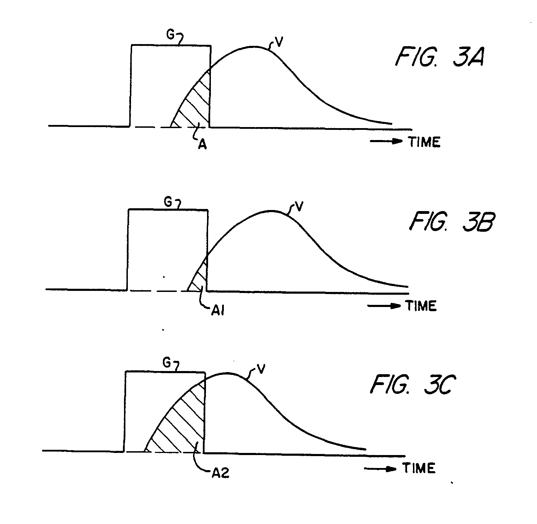

In FIGURE 2A-2I both the video pulses and the gating pulses are shown to be of square wave form: this is not generally the case in practice. The gate pulses can be substantially square, but the video pulses are unavoidably degraded. FIGURE 3 shows wave forms closer to what can be expected. Here curve G shows a gating pulse, and curve V shows the associated video pulse. The electronics is set up so that when the curves intersect to define a specific area A, comparator 31 gives a zero output and counter 34 is not actuated, If the area reduces to that indicated by $A_1$ in-FIGURE 3B, counter 34 is actuated step-wise to cause gate pulse G to occur later, while if the area increases to that indicator by $A_2$ in FIGURE 3C, counter 34 is actuated step-wise to, cause pulse G to occur earlier, this result repeating in each case until the area A is again achieved.

It is to be particularly noted that this effect of area variation takes place in each instance where a gating and a video pulse are in synchronism. Note that only when proper synchronization has been achieved does a maximum number of such instances take place. Thus, integrator 30 can disable counter 34 only when more than 2 areas per word are as shown in FIGURE 3A.

Generator 26 is synchronized from chain 23: it gives a pulse at 44 for each positive bit in the word from generator 25, and a pulse at 43 for each zero bit in the word. Thus, one or the other of two gates in circuit 27 is open whenever a video pulse is expected from unit 22, and the video pulses are supplied through adder 29 to jointly affect integrator 30.

The operation of the system is as follows.

Under the control of clock 10 and code generator 12 a continual sequence of pulses with PRN coding is transmitted from antenna 17, and a like sequence of coded pulses is supplied to gate generator 26 after a delay in line 24. Return pulses from antenna 20 cause video pulses at gating circuit 27. The system is in a search mode, as indicated at 35, in which logic 33 sends signals to cause sweep of counter 34 through its range repeatedly in a predetermined direction. At some point in the sweep the gating pulses come into approximate synchronism with the return pulses, to the extent that each gating pulse overlaps a video pulse. A signal of sufficient magnitude is accordingly supplied through integrator 30 to change logic 33 from its search state to its track status, as indicated at 35.

In the track mode, if the video pulses and the gate pulses overlap by an area A, the integrator signal to comparator 31 is equal to the reference 32, and the comparator gives no output, so that logic 33, counter 34, and indicator 36 remain in their present condition. Movement of the aircraft with respect to the ground, however, changes the delay of video signals V, to change the overlap area to some other value $A_1$ or $A_2$, and the signal to comparator 31 changes so that an "up" or a "down" output is supplied to logic 33 and causes operation of counter 34 to adjust delay line 24 in a sense to change the area toward the area A. This relation between members 30, 31, 32, 33, and 35 is well known, and will not be described in detail.

In any practical application of this type of. radio altimeter, radio frequency noise is always present and over any short interval it may be considered to be substantially constant. Gating circuit 27 supplies at 45 video signals having noise components and intelligence components, and at 46 video signals having only noise components, Since in a pseudorandom code word the numbers of positive and negative pulses are within one of being equal, the effective noise is greatly reduced by this arrangement. It is also found that the arrangement gives substantially complete suppression of range correlation side lopes.

From the above it will be evident that the invention comprises apparatus employing pseudorandom pulse coding to enable increased pulse repetition frequency in a radar system without introduction of ambiguity into the signals.

It will be evident that the arrangement has a high tolerance to interference, either intentional or incidental, since any interfering signal must comprise pulse having the particular pseudorandom coding in order to appreciably affect the apparatus.

## Claims

1. Radar distance measuring apparatus comprising:
   means (10) providing a continuous train of pulses having a predetermined repetition frequency, first coding means (11, 12, 13) for deriving from said train a first digital signal having a pseudorandom binary coding, second coding means (24, 23, 25) for deriving from said train a second digital signal having said coding, and means (16, 15, 17, 20, 21, 22) for transmitting said first digital signal and for receiving a train of video pulses having said binary coding and delayed in accordance with a distance to be measured, characterized by gating means (26, 27) connected to receive said video pulses and actuated in accordance with said second digital signal to supply at a first output (45) the positive-going video pulses together with background noise and at a second output (46) the background noise between said pulses.

2. Apparatus according to claim 1, characterized by an adding means (29) connected to the first and second output (45, 46) of said gating means (26, 27).

3. Apparatus according to claim 2, characterized by integrating means (30) connected to an output of said adding means (29).

4. Apparatus according to claim 1, characterized in that said gating means comprises:
   a gate generator (26) connected to said second coding means (24, 23, 25) to provide a pair of distinguishable gating pulses (43, 44) from the pulses of said second digital signal in accordance with whether said pulses have positive or zero values; and a gating circuit (27) connected to said gate generator (26) and to said video pulses to provide at said outputs (45, 46) signals one comprising video pulses together with background noise and one comprising background noise only.

5. Apparatus according to claim 3, characterized by delaying means (31, 32, 33, 34, 24) variably delaying said second digital signal in accordance with the output signal of said integrating means (30) to bring said second digital signal into synchronism with said video pulses.

6. Apparatus according to claim 5, characterized in that said delaying means includes a programmable delay line (24) and programming means (31 to 34) for programming said delay line in accordance with said output signal of said integrating means (30).

7. Apparatus according to claim 6, characterized in that said programming means comprise:

sweeping means (33, 34) initially sweeping said delay line (24) repetitively through a range of values; and interrupting means (31) comparing the output of the integrating means (30) and a reference voltage (32) and interrupting the operation of said sweeping means (33, 34) when said integrated output is greater than said reference voltage.

8. Apparatus according to claim 7, characterized in that said sweeping means (33) includes an up/down counter (34) acting upon said programmable delay line (24).

## Patentansprüche

1. Radar-Abstandsmeßgerät mit:

einer Einrichtung (10) zum Erzeugen einer fortlaufenden Impulsfolge mit vorgegebener Wiederholungsfrequenz; einer ersten Codiervorrichtung (11, 12, 13), um aus der Impulsfolge ein erstes Digitalsignal mit pseudostochastischer binärer Codierung abzuleiten; einer zweiten Codiervorrichtung (24, 23, 25), um aus der genannten Impulsfolge ein zweites Digitalsignal mit dieser Codierung abzuleiten; und einer Vorrichtung (16, 15, 17, 20, 21, 22) zum Aussenden des ersten Digitalsignals und zum Empfangen einer entsprechend der zu messenden Entfernung verzögerten Folge von Videoimpulsen mit der genannten Codierung, gekennzeichnet durch eine Gatterschaltung (26, 27) für den Empfang der Videoimpulse und gesteuert in Abhängigkeit vom genannten zweiten Digitalsignal, um an einem ersten Ausgang (45) die positiv gerichteten Videoimpulse samt Hintergrundrauschen zu liefern und an einem zweiten Ausgang (46) das Hintergrundrauschen zwischen den genannten Impulsen zur Verfügung zu stellen.

2. Gerät nach Anspruch 1, gekennzeichnet durch einen an den ersten und den zweiten Ausgang (45, 46) der Gatterschaltung (26, 27) angeschlossenen Addierer (29).

3. Gerät nach Anspruch 2, gekennzeichnet durch einen an einen Ausgang des Addierers (29) angeschlossenen Integrator (30).

4. Gerät nach Anspruch 1, dadurch gekennzeichnet, daß die Gatterschaltung umfaßt:

einen an die zweite Codiervorrichtung (24, 23, 25) angeschlossenen Gatterschaltimpulsgenerator (26), der aus den Impulsen des zweiten Digitalsignals in Abhängigkeit davon, ob diese Impulse einen positiven Wert oder den Wert Null haben, zwei unterschiedliche Torimpulse (43, 44) liefert; und eine an den Gatterschaltimpulsgenerator und an die Videoimpulse angeschlossene Torschaltung (27), um an den Ausgangen (45, 46) Signale zu liefern, von denen das eine Videoimpulse samt Hintergrundrauschen und das anderenur Hintergrundrauschen enthält.

5. Gerät nach Anspruch 3, gekennzeichnet durch eine Verzögerungseinrichtung (31, 32, 33, 34, 24), welche das zweite Digitalsignal veränderbar verzögert in Abhängigkeit vom Ausgangssignal des Integrators (30), um das zweite Digitalsignal mit den Videoimpulsen zu synchronisieren.

6. Gerät nach Anspruch 5, dadurch gekennzeichnet, daß die Verzögerungseinrichtung eine programmierbare Verzögerungsleitung (24) und eine Programmiereinrichtung (31—34) zum Programmieren der Verzögerungsleitung in Abhängigkeit vom Ausgangssignal des Integrators (30) enthält.

7. Gerät nach Anspruch 6, dadurch gekennzeichnet, daß die Programmiereinrichtung umfaßt:

eine Durchstimmvorrichtung (33, 34), welche anfänglich die Verzögerungsleitung (24) wiederholt über einen Bereich von Werten verändert; und eine Unterbrechungsvorrichtung (31), welche das Ausgangssignal des Integrators (30) mit einer Bezugsspannung (32) vergleicht und den Betrieb der Durchstimmvorrichtung (33, 34) unterbricht, sobald das integrierte Ausgangssignal größer ist als die Bezugsspannung.

8. Gerät nach Anspruch 7, dadurch gekennzeichnet, daß die Durchstimmeinrichtung (33) einen Aufwärts/Abwärtszähler (34) umfaßt der auf die programmierbare Verzögerungsleitung (24) einwirkt.

## Revendications

1. Appareil radar pour mesurer la distance comportant:

un dispositif (10) fournissant un train d'impulsions ayant une fréquence de répétition prédéterminée, un premier dispositif de codage (11, 12, 13) pour dériver à partir dudit train un premier signal numérique présentant un codage binaire pseudo-aléatoire,

un second dispositif de codage (24, 23, 25) pour dériver à partir dudit train un second signal numérique présentant ledit codage, et un dispositif (16, 15, 17, 20, 21, 22) pour transmettre ledit premier signal numérique et pour recevoir un train d'impulsions vidéo présentant ledit codage binaire et retardé en fonction de la distance à mesurer, caractérisé par un dispositif de déclenchement périodique (26, 27) connecté pour recevoir lesdites impulsions vidéo et actionné en fonction dudit second signal numérique pour transférer à une première sortie (45) les impulsions vidéo à transition positive conjointement avec un bruit de fondet àune seconde sortie (46) le bruit de fond entre lesdites impulsions.

2. Appareil selon la revendication 1, caractérisé par un dispositif totalisateur (29) connecté aux première et seconde sorties (45, 46) dudit dispositif de déclenchement périodique (26, 27).

3. Appareil selon la revendication 2, caractérisé parun dispositif d'intégration (30) connecté à une sortie dudit dispositif totalisateur (29).

4. Appareil selon la revendication 1, caractérisé en ce que ledit dispositif de déclenchement périodique comprend:

un générateur de déclenchement (26) connecté audit second dispositif de codage (24, 23, 25) pour produire une paire d'impulsions sélectives discernables (43, 44) à partir des impulsions dudit second signal numérique en fonction des valeurs zéro ou positives desdites impulsions; et

un circuit de déclenchement périodique (27) connecté audit générateur de déclenchement (26) et auxdites impulsions vidéo pour appliquer auxdites sorties (45, 46) des signaux dont l'un est constitué d'impulsions vidéo conjointement avec le bruit de fond et l'autre constitué du bruit de fond uniquement.

5. Appareil selon la revendication 3, caractérisé par un dispositif à retard (31, 32, 33, 34, 24) qui retarde de manière variable ledit second signal numérique en fonction du signal de sortie dudit dispositif intégrateur (30) pour amener ledit second signal numérique en synchronisme avec lesdites impulsions vidéo.

6. Appareil selon la revendication 5, caractérisé en ce que ledit dispositif à retard comprend une ligne à retard programmable (24) et un dispositif de programmation (31 à 34) pour programmer ladite ligne à retard en fonction dudit signal de sortie dudit dispositif d'intégration (30).

7. Appareil selon la revendication 6, caractérisé en ce que ledit dispositif de programmation comprend:

un dispositif de balayage (33,34) pour balayer initialement ladite ligne à retard (24) de façon répétitive sur une plage de valeurs; et un dispositif d'interruption (31) pour comparer la sortie des moyens d'intégration (30) et une tension de référence (32), et interrompre le fonctionnement dudit dispositif de balayage (33, 34) lorsque la sortie intégrée est supérieure à ladite tension de référence.

8. Appareil selon la revendication 7, caractérisé en ce que ledit dispositif de balayage (33) comporte un compteur/décompteur (34) agissant sur ladite ligne à retard programmable (24).

FIG. 1

# FIG. 2

REPEATING 7 BIT PRN CODE WORD

TIME

FIG. 3A

FIG. 3B

FIG. 3C